# EUROPEAN PATENT APPLICATION

(11) **EP 4 355 005 A1**
(43) Date of publication of application: **17.04.2024**
(21) Application number: 22823908.3
(22) Date of filing: 25.04.2022
(51) Int. Cl.: H04W 72/12, H04W 40/22, H04W 48/20, H04L 41/12

(54) **SCHEDULING METHOD, AND MASTER NODE AND COMPUTER-READABLE STORAGE MEDIUM**

(30) Priority: 18.06.2021 CN 202110680519
(71) Applicant: ZTE Corporation, Shenzhen, Guangdong 518057 (CN)
(72) Inventor: ZHANG, Xueqian, Shenzhen, Guangdong 518057 (CN)
(74) Representative: Savi, Massimiliano
(86) International application number: PCT/CN2022/089081
(87) International publication number: WO 2022/262423

(57) **Abstract**

A scheduling method, a master node, and a computer-readable storage medium. The scheduling method comprises: receiving reporting information, which is sent by a child node in a Mesh network (201); determining, according to the reporting information, whether a target link exists in the Mesh network (202), wherein a node on the target link can provide a preset bandwidth for a terminal; if the target link does not exist, determining whether a target child node exists in the Mesh network (203), wherein the terminal can provide the preset bandwidth for the terminal by means of a node on a link from the target child node to a network egress; and if the target child node exists, scheduling the terminal from the currently connected child node to the target child node (204).

## Description

### CROSS-REFERENCE TO RELATED APPLICATION

This application is filed on the basis of Chinese patent application No. 202110680519.9 filed June 18, 2021, and claims priority to the Chinese patent application, the entire contents of which are incorporated herein by reference.

### TECHNICAL FIELD

Embodiments of the present disclosure relate to the field of terminal device technologies, and in particular, to a scheduling method, a master node, and a computer-readable storage medium.

### BACKGROUND

Wireless mesh networks are based on the cooperation and collaboration between numerous wireless access points (APs) distributed in a mesh, and have the advantages of broadband, high speed and high spectrum efficiency and the outstanding characteristics such as dynamic self-organization, self-configuration and self-maintenance. At present, there are already mature schemes for the management of terminal devices connected to a single AP. However, for the entire mesh network, when capabilities of nodes in the mesh network are different from each other and each terminal device can roam flexibly among the nodes, there is no corresponding resource scheduling mode that can meet the customized requirement of users for services of the terminal devices.

### SUMMARY

Embodiments of the present disclosure provide a scheduling method, a master node, and a computer-readable storage medium.

In view of the above, an embodiment of the present disclosure provides a scheduling method, applied to a master node in a mesh network. The mesh network includes a plurality of nodes, including the master node and a plurality of child nodes configured to connect a terminal device to the mesh network. The terminal device is configured with a resource parameter which includes at least a preset bandwidth, and the preset bandwidth satisfies a bandwidth required by the terminal device for executing a target service. The method includes: receiving reporting information sent by the child nodes in the mesh network; determining, according to the reporting information, whether a target link exists in the mesh network, where a node on the target link is capable of providing the preset bandwidth for the terminal device; determining whether a target child node exists in the mesh network, in response to determining that the target link does not exist, where a node on a link from the terminal device to a network egress through the target child node is capable of providing the preset bandwidth for the terminal device; and scheduling the terminal device from a child node to which the terminal device is currently connected to the target child node, in response to determining that the target child node exists.

In view of the above, an embodiment of the present disclosure provides a master node, including: at least one processor; and a memory communicatively connected to the at least one processor. The memory stores an instruction executable by the at least one processor which, when executed by the at least one processor, causes the at least one processor to implement the above scheduling method.

In view of the above, an embodiment of the present disclosure provides a computer-readable storage medium, storing a computer program which, when executed by a processor, causes the processor to implement the above scheduling method.

### BRIEF DESCRIPTION OF DRAWINGS

FIG. 1 is a schematic diagram of distribution of nodes in a mesh network according to an embodiment of the present disclosure;
FIG. 2 is a flowchart of a scheduling method according to an embodiment of the present disclosure;
FIG. 3 is a flowchart of an implementation of step 202 according to an embodiment of the present disclosure;
FIG. 4 is a schematic diagram of a plurality of terminal devices accessing a mesh network according to an embodiment of the present disclosure;
FIG. 5 is a schematic diagram of scheduling of a terminal device B to a child node 3 in a mesh network according to an embodiment of the present disclosure; and
FIG. 6 is a schematic structural diagram of a master node according to an embodiment of the present disclosure.

### DETAILED DESCRIPTION

Objectives, technical schemes and advantages of the embodiments of the present disclosure will be clearer from a detailed description in conjunction with the drawings. However, it may be understood by those having ordinary skills in the art that although various embodiments of the present disclosure provide many technical details to make readers better understand the present disclosure, the technical schemes claimed in the present disclosure can be realized without these technical details and various variations and modifications made based on the following embodiments. The following embodiments are divided for convenience of description and are not intended to constitute any limitation to the specific implementations of the present disclosure. The embodiments may be combined to derive other embodiments not explicitly described.

To facilitate the understanding of the embodiments of the present disclosure, a mesh network involved in the present disclosure will be first briefly described below.

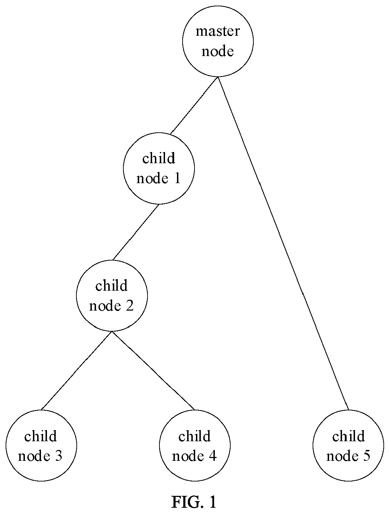

The mesh network includes a plurality of nodes including a master node and a plurality of child nodes configured to connect a terminal device to the mesh network. The nodes in the mesh network may be nodes from the identical or different manufacturers. Wi-Fi capabilities and deployment locations of the nodes may be different or partially identical. FIG. 1 is a schematic diagram of distribution of nodes in a mesh network. One or more terminal devices may be connected to each child node.

In an example, the mesh network may be an Easymesh network. In "Multi-AP Specification Version 2.0" (i.e., Easymesh R2 standard), the protocol specifies a frame format for initiating client scheduling, but does not specify an occasion for generating the scheduling and a policy for the scheduling. For the entire mesh network, when capabilities of nodes in the mesh network are different from each other and each terminal device can roam flexibly among the nodes, there is no corresponding resource scheduling mode that can meet the customized requirement of users for services of the terminal devices.

In view of the above, an embodiment of the present disclosure provides a scheduling method, applied to a master node in a mesh network. Child nodes in the mesh network may be configured to connect a terminal device to the mesh network. The terminal device is configured with a resource parameter including at least a preset bandwidth which satisfies a bandwidth required by the terminal device for executing a target service. The target service may be set according to actual needs. For example, the target service may be a high-definition (HD) video service, a download service, etc. In this embodiment, the mesh network better ensures that the terminal device can execute the target service, and provides the bandwidth required by the terminal device for executing the target service, to meet customized requirement of the user for the target service of the terminal device.

In an example, the preset bandwidth is a minimum bandwidth required by the terminal device for executing the target service. In other words, the preset bandwidth corresponds to a minimum amount of resources that the terminal device can keep. For some specific services such as a high-definition video or a real-time service, the terminal device requires the minimum bandwidth to ensure its service requirements, and allocating more bandwidth to the terminal device cannot further improve user experience. The minimum bandwidth can meet the requirements of the target service of the terminal device, and there is no need to allocate more bandwidth. In this way, the limited bandwidth can be distributed to more terminal devices, to meet service requirements of more terminal devices in the mesh network.

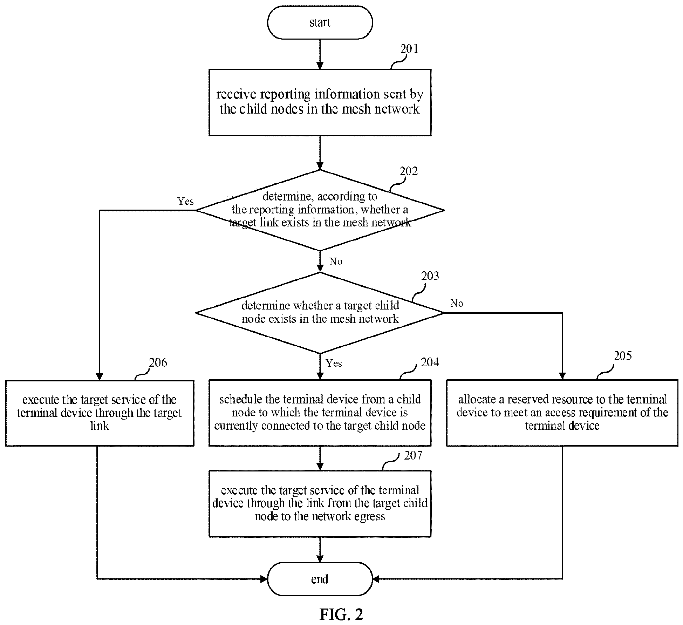

In this embodiment, a flowchart of the scheduling method is as shown in FIG. 2, including the following steps 201 to 207.

In a step of 201, reporting information sent by the child nodes in the mesh network is received.

In a step of 202, it is determined, according to the reporting information, whether a target link exists in the mesh network. If so, step 206 is executed; otherwise, step 203 is executed. A node on the target link is capable of providing the preset bandwidth for the terminal device.

In a step of 203, it is determined whether a target child node exists in the mesh network. If so, step 204 is executed; otherwise, step 205 is executed. A node on a link from the terminal device to a network egress through the target child node is capable of providing the preset bandwidth for the terminal device.

In a step of 204, the terminal device is scheduled from a child node to which the terminal device is currently connected to the target child node.

In a step of 205, a reserved resource is allocated to the terminal device to meet an access requirement of the terminal device.

In a step of 206, the target service of the terminal device is executed through the target link.

In a step of 207, the target service of the terminal device is executed through the link from the target child node to the network egress.

In the embodiment of the present disclosure, a resource parameter is configured for the terminal device accessing the mesh network, and the resource parameter includes at least the preset bandwidth. The preset bandwidth meets the bandwidth required by the terminal device for executing the target service. Therefore, if a target link on which nodes are capable of providing the preset bandwidth for the terminal device exists, the terminal device can smoothly execute the target service through the target link. If the target link does not exist, the terminal device is scheduled from the child node to which the terminal device is currently connected to the target child node. A node on the link from the terminal device to the network egress through the target child node is capable of providing the preset bandwidth for the terminal device. In this way, during roaming in the mesh network, the terminal device can smoothly execute the target service by utilizing the preset bandwidth provided by the related node. In the embodiment of the present disclosure, a scheduling mode is provided for a scenario where the terminal device roams among different nodes in the mesh network, so as to meet the customized requirement of the user for the target service of the terminal device and ensure that the target service of the terminal device can be well executed.

In an example, the reporting information in step 201 includes: connection topology information of the child node, a remaining resource of the child node, a first rate of data transmission between the child node and a node neighboring to the child node, a second rate of data transmission between a child node to which the terminal device is connected and the terminal device. The connection topology information of the child node may be path information from the child node to the network egress in the mesh network. The network egress may be an optical modem, a wireless air interface, etc. The network egress may be connected to the master node or arranged on the master node. The node neighboring to the child node may be another child node in the mesh network or the master node. In an implementation, the child node may periodically report the reporting information required by the master node.

For example, each child node in the mesh network reports its 2.4G bandwidth, 5th Generation Mobile Communication Technology (5G) bandwidth, and a capability that the child node can obtain from a connection to a higher-level node. The obtained capability may be a rate at which the higher-level node sends data to a lower-level node. For example, child node 1 supports a maximum rate of 300 Mb/s for 2.4G and a maximum rate of 866 Mb/s for 5G. That is, when the child node 1 is connected to its higher-level node by 5G, an actual negotiation rate is 866 Mb/s. In the mesh network, the child node connected to the terminal device reports a real-time negotiation rate with the terminal device, i.e., a rate of data transmission between the child node to which the terminal device is connected and the terminal device.

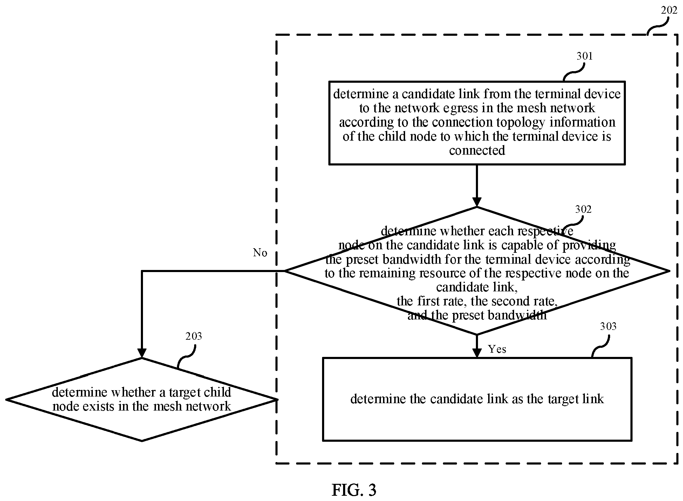

In an example, as shown in FIG. 3, an implementation of step 202 may include the following steps 301 to 303.

In a step of 301, a candidate link from the terminal device to the network egress in the mesh network is determined according to the connection topology information of the child node to which the terminal device is connected.

In a step of302, it is determined whether each respective node on the candidate link is capable of providing the preset bandwidth for the terminal device according to the remaining resource of the respective node on the candidate link, the first rate, the second rate, and the preset bandwidth. If so, step 303 is executed; otherwise, step 203 is executed.

In a step of 303, the candidate link is determined as the target link.

It can be understood that there is a large number of nodes in the mesh network, so there may be a plurality of paths from the terminal device to the network egress. In step 301, the master node may determine a plurality of links via which information transmitted by the terminal device can reach the network egress in the mesh network according to the connection topology information reported by the child node to which the terminal device is connected, and determine the plurality of links as candidate links.

In step 302, the master node may determine whether each node on the candidate link is capable of providing the preset bandwidth for the terminal device according to the remaining resource of the respective node on the candidate link, the first rate, the second rate, and the preset bandwidth. The nodes on the candidate link include a child node 1 (or referred to as a leaf node) to which the terminal device is connected, the master node, and an intermediate node connected between the leaf node and the master node. In an implementation, the master node may sequentially determine in the following manner whether the leaf node, the intermediate node, and the master node on the candidate link can provide the preset bandwidth for the terminal device.

Firstly, the master node determines whether the child node to which the terminal device is connected on the candidate link is capable of providing the preset bandwidth for the terminal device according to the second rate and the remaining resource of the child node to which the terminal device is connected. For example, if R(C, S2) > BW and BW/R(C, S2) > L(S2), it is determined that the child node to which the terminal device is connected on the candidate link is capable of providing the preset bandwidth for the terminal device, where R(C, S2) represents the second rate, BW represents the preset bandwidth, and L(S2) represents the remaining resource of the child node to which the terminal device is connected. R(C, S2) may be further understood as a rate at which the child node to which the terminal device is connected sends data to the terminal device.

Then, the master node determines, according to a first rate of data transmission between an intermediate node on the candidate link and a node neighboring to the intermediate node and the remaining resource of the intermediate node, whether the intermediate node is capable of providing the preset bandwidth for the terminal device, where the intermediate node is a node other than the master node and the child node to which the terminal device is connected among the nodes on the candidate link. For example, if R(S2, S1) > BW and BW/R(S2, S1) > L(S1), it is determined that the intermediate node is capable of providing the preset bandwidth for the terminal device, where R(S2, S1) represents the first rate of data transmission between the intermediate node and the node neighboring to the intermediate node, BW represents the preset bandwidth, and L(S1) represents the remaining resource of the intermediate node. R(S2, S1) may be further understood as a rate at which an upstream one of the two adjacent child nodes sends data to a downstream one of the two adjacent child nodes.

Next, the master node determines whether the master node is capable of providing the preset bandwidth for the terminal device according to a first rate of data transmission between the master node and the child node to which the master node is connected on the candidate link and a remaining resource of the master node. For example, if R(S 1, M) > BW and BW/R(S 1, M) > L(M), it is determined that the master node is capable of providing the preset bandwidth for the terminal device, where R(S1, M) represents the first rate of data transmission between the master node and the child node connected to the master node on the candidate link, BW represents the preset bandwidth, and L(M) represents the remaining resource of the master node. R(S1, M) may be further understood as a rate at which the master node sends data to the child node connected to the master node.

For ease of understanding, an example is given below to illustrate how to determine whether a candidate link can be determined as the target link.

Firstly, some symbols are defined for the nodes in the mesh network.

S2, S1, and M denote the nodes in the mesh network, where S denotes the child node, and M denotes the master node.

R(S2, S1) represents a real-time rate of an upstream child node S1 of the child node S2, and is measured in b/s, i.e., a rate at which the child node S1 sends data to the child node S2.

L(S2) represents a remaining resource of the child node S2, which may be expressed as a remaining resource percentage in an implementation and has an initial value of 100%.

It is assumed that data from a client, i.e., a terminal device, reaches the network egress through two-hop mesh nodes, i.e., a candidate link is child node S2 - child node S1 - master node, and the nodes may be connected by 4G, 5G, or other wireless means. A bandwidth value that the nodes on the candidate link has to reserve for the terminal device is BW, i.e., the preset bandwidth configured for the terminal device is BW. The nodes on the candidate link reserve the preset bandwidth for the terminal device. To be specific, for the nodes, resources are reserved at the child node S2 for the terminal device, resources are in turn reserved at the child node S1 for the child node S2, and resources are also reserved at the master node M for the child node S1. It can be understood that the candidate link of "child node S2 - child node S1 - master node" includes three path segments, which are respectively described below.

First path segment: terminal device C - child node S2. A bandwidth of BW b/s needs to be reserved, and a real-time rate between the terminal device C and the child node S2 is R(C, S2). When R(C, S2) > BW and BW/R(C, S2) > L(S2), it can be considered that this link segment satisfies the preset bandwidth required by the terminal device, i.e., the child node S2 is capable of providing the preset bandwidth for the terminal device. A resource of BW/R(C, S2) has to be reserved at S2 for the terminal device. In this case, the remaining resource available for allocation at S2 is L(S2) - BW/R(C, S2).

Second path segment: child node S2 - child node S1. Similarly, a bandwidth of BW has to be reserved at S1 for S2, such that S1 can reserve a bandwidth of BW for the terminal device C. A real-time rate between the child node S2 and the child node S1 is R(S2, S1). When R(S2, S1) > BW and BW/R(S2, S1) > L(S1), it can be considered that this link segment also satisfies the preset bandwidth required by the terminal device. A resource of BW/R(S2, S1) is reserved at S1, and the remaining resource available for allocation at S1 is L(S1) - BW / R(S2, S1).

Third path segment: child node S1 - master node M. Similarly, a resource of BW/R(S1, M) has to be reserved in this segment, and the remaining resource on the master node M is L(M) - BW/R(S1, M). If all the three path segments satisfy the preset bandwidth required by the terminal device, the remaining resources of S2, S1, and M are updated respectively, so that this part of resources is reserved for the terminal device.

If one of the path segments does not satisfy the preset bandwidth required by the terminal device, the terminal device may be marked to indicate that the current topology cannot satisfy the bandwidth requirement of the terminal device, i.e., no target link for the terminal device exists in the mesh network, and step 203 may be executed to determine whether a target child node exists in the mesh network. A node on a link from the terminal device to a network egress through the target child node is capable of providing the preset bandwidth for the terminal device. A reason that one of the path segments does not satisfy the preset bandwidth required by the terminal device may be that most terminal devices are connected to a child node, so that resources of this child node are used up, while other child nodes are still idle. This can be solved by connecting the terminal device to other idle child nodes.

For example, sufficient bandwidth cannot be ensured at a current location of the terminal device, i.e., none of links from the terminal device to the network egress satisfies the preset bandwidth required by the terminal device when the terminal device is connected to the current child node, and currently only a child node N has a remaining resource, but the terminal device is still connected to the original child node. In order to determine through calculation whether the preset bandwidth required by the terminal device can be satisfied after the terminal device is connected to the child node N, a real-time rate that can be roughly acquired after the terminal device is connected to the child node N, i.e., a rate of data transmission between the terminal device and the child node N, may be estimated firstly. Because currently the terminal device is not connected to the child node N, the rate of data transmission between the terminal device and the child node N after the terminal device is connected to the child node N may be firstly estimated (for example, this estimation can be implemented based on the IEEE 802.11k protocol). Then, based on the method of determining whether each node on the candidate link is capable of providing the preset bandwidth for the terminal device as discussed above, it may be further determined whether a node on a path via which data sent by the terminal device reaches the network egress through the child node N is capable of providing the preset bandwidth for the terminal device. If so, the child node N can be determined as a target node, and the terminal device is scheduled from the node to which the terminal device is currently connected to the target node. The process of scheduling the terminal device from the node to which the terminal device is currently connected to the target node may be implemented using various steering requests specified in the Easymesh protocol, which is not particularly limited in this embodiment.

In an example, if there is no target child node for the terminal device, the master node may allocate a reserved resource to the terminal device to meet an access requirement of the terminal device, such that the terminal device can still maintain the ability to access the mesh network. In this way, when there is an idle node later, the terminal device can be scheduled to the idle node. In another example, if there is no target child node for the terminal device, the process in FIG. 2 may be ended directly, and the terminal device may contend for resources fairly with other terminal devices in the mesh network.

In an embodiment, there may be a plurality of terminal devices accessing the mesh network, and the resource parameter further includes a priority, which is equivalent to setting resource priority levels for different terminal devices. A resource scheduler preferentially meets a service requirement of a terminal device with a high priority according to the priorities. When a total bandwidth resource is insufficient, the resource scheduler may reduce the bandwidth allocated to a terminal device with a low priority. If a priority of a terminal device is not set, it may be considered that a lowest priority is allocated to the terminal device by default.

In this embodiment, the resource parameter includes a minimum bandwidth (i.e., preset bandwidth) and a priority, and the terminal device may have a resource parameter set {BW, priority}, where BW represents the minimum bandwidth required by the terminal device, and priority represents the priority of the terminal device.

In an example, for a terminal device that newly accesses the mesh network, the master node may preset a set of default resource parameters to set the lowest priority for the newly accessing terminal device. This means that no special attention has been paid to this terminal device, the nodes will not reserve a bandwidth for this terminal device, and this terminal device contends fairly with other terminal devices having not been configured for channel resources.

In another example, a user may manually set a set of resource parameters for a newly accessing terminal device, such that a service requirement of the terminal device can be met. For example, the user may input corresponding resource parameters for the newly accessing terminal device through a user interface (UI). Table 1 containing resource parameters below may be displayed on the UI.

**Table 1**

| Terminal device name | Location | MAC address | IP address | Preset bandwidth | Priority |
|---|---|---|---|---|---|
| Terminal device A | dining room | 60:14:66:77:50:FA | 192.168.1.100 | 20 Mb/s | 0 |
| Terminal device B | dining room | 66:14:66:77:50:FA | 192.168.1.102 | 10 Mb/s | 1 |
| Terminal device C | living room 1 | 6A:14:66:77:50:FA | 192.168.1.103 | default | default |
| Terminal device D | study | 6E:14:66:77:50:FA | 192.168.1.104 | default | default |

The location indicates a location where the child node to which the terminal device is connected is arranged. The priority may be 1, 0, or default in a descending order, i.e., the default priority indicates the lowest priority. The preset bandwidth may have a preset default value which may be preset by those having ordinary skill in the art according to actual needs and stored in the master node, which is not particularly limited in this embodiment. The Media Access Control (MAC) address may be a MAC address of the terminal device. The Internet Protocol (IP) address may be an IP address of the terminal device.

In this embodiment, determining, according to the reporting information, whether a target link exists in the mesh network may include: sequentially determining, according to the reporting information and in a descending order of priorities of the plurality of terminal devices accessing the mesh network, whether a target link from each of the plurality of terminal devices to the network egress exists in the mesh network. For example, terminal devices accessing the mesh network include a terminal device A, a terminal device B, a terminal device C, and a terminal device D. The four terminal devices are arranged in a descending order of priorities as follows: terminal device D, terminal device B, terminal device C, and terminal device A. In this case, the master node may firstly determine according to the reporting information whether a target link from the terminal device D to the network egress exists in the mesh network, and ensure that resources can be preferentially reserved for the terminal device D if the target link from the terminal device D to the network egress exists. Next, the master node may determine according to the reporting information whether a target link from the terminal device B to the network egress exists in the mesh network. Then, the master node may determine according to the reporting information whether a target link from the terminal device C to the network egress exists in the mesh network. Finally, the master node may determine according to the reporting information whether a target link from the terminal device A to the network egress exists in the mesh network. In other words, the master node determines, for each terminal device in a descending order of priorities, whether there are a corresponding series of nodes that can reserve a preset bandwidth required by the terminal device. Determining whether there is a target link for a high-priority terminal device in the mesh network is beneficial to preferentially meeting a service requirement of the high-priority terminal device, to further meet the customized requirement of users for services of terminal devices. For example, a higher priority is set for a terminal device responsible for executing a service having a high user requirement.

In an example, there are a plurality of terminal devices accessing the mesh network, and determining whether a target child node exists in the mesh network includes: determining, by the master node, a remaining resource of each node in the mesh network; then, determining, by the master node, a to-be-scheduled terminal device for which the target link does not exist; and when there are a plurality of to-be-scheduled terminal devices, sequentially determining, according to the remaining resource of each node and in a descending order of priorities of the plurality of to-be-scheduled terminal devices, whether target child nodes for the plurality of to-be-scheduled terminal devices exist in the mesh network. In other words, after determining whether a target link from each of the plurality of terminal devices to the network egress exists in the mesh network, the master node can further obtain the remaining resource of each node and the terminal devices whose bandwidth requirements cannot be met (the to-be-scheduled terminal devices for which the target link does not exist). Then, the master node may search for suitable locations on other child nodes for these to-be-scheduled terminal devices in a descending order of priorities according to the remaining resource of each node, to ensure that a high-priority to-be-scheduled terminal device can be preferentially scheduled, thereby preferentially meeting a service requirement of the high-priority to-be-scheduled terminal device.

In an example, if there is no target child node for some terminal devices in the mesh network, these terminal devices may be marked on the UI, and a part of reserved resources may be centrally allocated to these terminal devices for which no target child node exists, to ensure minimum accessing requirements of the terminal devices.

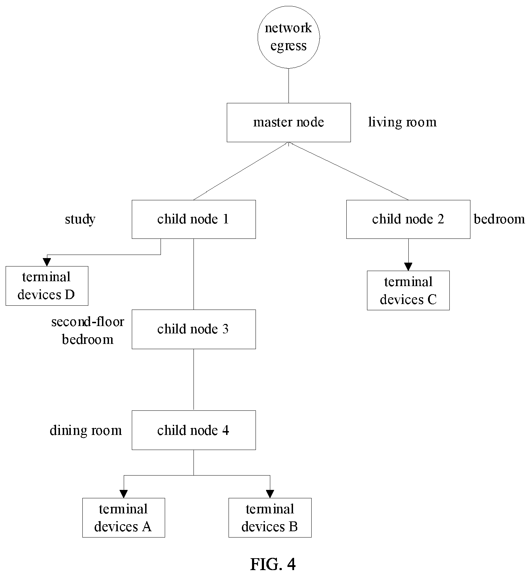

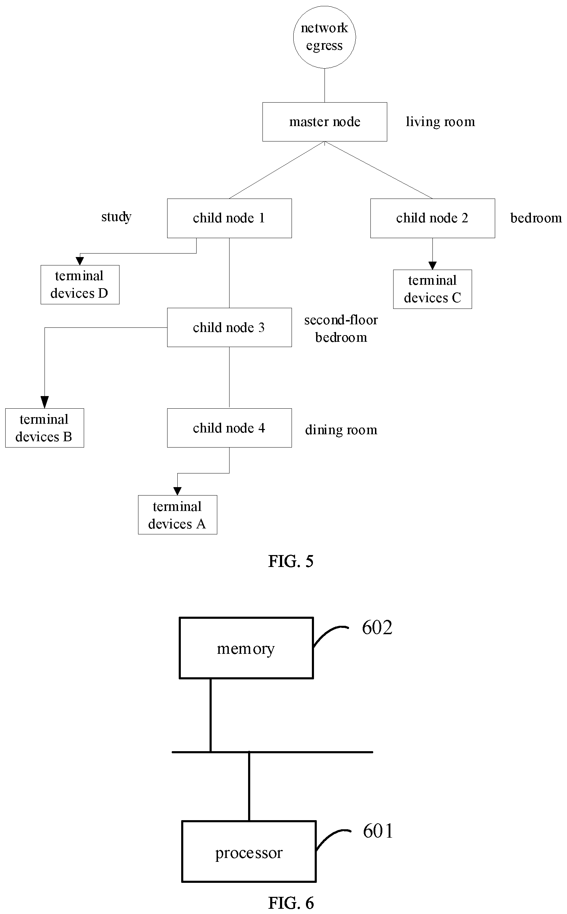

For ease of understanding, an example is described below. Referring to FIG. 4, a mesh network includes a master node arranged in a living room, a child node 1 arranged in a study, a child node 2 arranged in a bedroom, a child node 3 arranged in a second-floor bedroom, and a child node 4 arranged in a dining room. Terminal devices accessing the mesh network include terminal devices A and B connected to the child node 4, a terminal device C connected to the child node 2, and a terminal device D connected to the child node 1. It is assumed that the master node determines according to reporting information that there is a target link for each of the terminal device A, the terminal device C, and the terminal device D in the mesh network, and there is no target link for the terminal device B, i.e., terminal device B is a to-be-scheduled terminal device. It is determined through calculation that when the terminal device B is connected to the child node 3, nodes on a link from the terminal device B to the network egress through the child node 3 is capable of providing the terminal device B with a preset bandwidth configured for the terminal device B. Then, the master node may schedule the terminal device B from the child node 4 to which the terminal device B is currently connected to the child node 3. FIG. 5 shows a schematic diagram after the scheduling. The terminal device B may execute a to-be-executed service through a link from the child node 3 to the network egress. Nodes on the link from the child node 3 to the network egress include the child node 3, the child node 1, and the master node.

The embodiment of the present disclosure may be applied to the following scenarios: 1. bandwidth guarantee is provided for one or more terminal devices in the entire mesh network (for example, by setting preset bandwidths for one or more terminal devices); 2. it is detected in real time whether an expected bandwidth of a terminal device can be met at different locations (for example, when connected to different child nodes), and suggestions are provided for movement/location of the terminal device (for example, scheduling the terminal device to a target child node); and 3. a service requirement of a terminal device requiring special attention in the mesh network is preferentially guaranteed (for example, by setting a higher priority for the terminal device requiring special attention).

The scheduling method in this embodiment can ensure that no matter which node the terminal device connects to, the preset bandwidth required by the terminal device for executing the target service can be provided by nodes in the mesh network, thereby ensuring the smooth execution of the target service. When the terminal device is too far away from all the nodes and the required preset bandwidth cannot be provided, a user prompt may further be provided. By setting priorities of a plurality of terminal devices accessing the mesh network and setting a high priority for the terminal device requiring special attention, the mesh network can preferentially meet a service requirement of the terminal device with the high priority, thereby meeting customized requirement of users for services of the terminal devices.

It should be noted that the examples in the embodiments of the present disclosure are described for ease of understanding, and are not intended to limit the technical schemes of the embodiments of the present disclosure.

It should be understood that the division of the operations of the above methods is only for the sake of clear description, and in practical applications, the steps may be combined into one step, or some steps may be divided into multiple steps. Such combination or division falls within the scope of protection of the present disclosure as long as the identical logical relationship is included. Any insignificant modification made to or any insignificant design introduced in an algorithm or process without changing the core design of the algorithm and process shall fall within the scope of protection of the present disclosure.

An embodiment of the present disclosure relates to a master node. As shown in FIG. 6, the mater node includes: at least one processor 601, and a memory 602 communicatively connected to the at least one processor 601. The memory 602 stores an instruction executable by the at least one processor 601 which, when executed by the at least one processor 601, causes the at least one processor 601 to implement the scheduling method according to the foregoing method embodiments.

The memory 602 and the processor 601 are connected by a bus which may include any number of interconnected buses and bridges. The bus connects various circuits of one or more processors 601 and the memory 602 together. The bus may also connect a peripheral device, a voltage regulator, a power management circuit, and other circuits, which are well known in the art and therefore will not be detailed herein. A bus interface provides an interface between the bus and a transceiver. A transceiver may be one element or a plurality of elements, for example, a plurality of receivers and transmitters, and provide a unit for communicating with various other apparatus over a transmission medium. Data processed by the processor 601 is transmitted over a wireless medium through an antenna which further receives data and transmits the data to the processor 601.

The processor 601 is responsible for bus management and general processing and may also provide various functions including timing, peripheral interfaces, voltage regulation, power management and other control functions. The memory 602 may be configured to store data used by the processor 601 in performing operations.

An embodiment of the present disclosure relates to a computer-readable storage medium, storing a computer program which, when executed by a processor, causes the processor to implement the foregoing method embodiments.

In the embodiments of the present disclosure, the resource parameter is configured for the terminal device accessing the mesh network, and the resource parameter includes at least the preset bandwidth. The preset bandwidth meets the bandwidth required by the terminal device for executing the target service. Therefore, if a target link on which nodes are capable of providing the preset bandwidth for the terminal device exists, the terminal device can smoothly execute the target service through the target link. If the target link does not exist, the terminal device is scheduled from the child node to which the terminal device is currently connected to the target child node. A node on the link from the terminal device to the network egress through the target child node is capable of providing the preset bandwidth for the terminal device. In this way, during roaming in the mesh network, the terminal device can smoothly execute the target service by utilizing the preset bandwidth provided by the related node. In the embodiments of the present disclosure, a scheduling mode is provided for a scenario where the terminal device may roam among different nodes in the mesh network, so as to meet the customized requirement of the user for the target service of the terminal device and ensure that the target service of the terminal device can be well executed.

It may be understood by those having ordinary skills in the art that all or some of the steps of the methods in the above embodiments may be performed by a program instructing related hardware. The program is stored in a storage medium, and includes several instructions to cause a device (which may be a single chip microcomputer, a chip, etc.) or a processor to perform all or some of the steps of the methods described in the embodiments of the present disclosure. The foregoing storage medium includes: USB flash drive, removable hard disk, Read-Only Memory (ROM), Random Access Memory (RAM), magnetic disk, an optical disk or any medium that can store program code.

It may be understood by those having ordinary skills in the art that the foregoing embodiments are specific embodiments for practicing the present disclosure and that in practical applications, various changes in form and details may be made without departing from the scope of the present disclosure.

## Claims

1. A scheduling method, applied to a master node in a mesh network, wherein the mesh network comprises a plurality of nodes comprising the master node and a plurality of child nodes configured to connect a terminal device to the mesh network, and wherein the terminal device is configured with a resource parameter comprising at least a preset bandwidth which satisfies a bandwidth required by the terminal device for executing a target service, the method comprising:
receiving reporting information sent by the child nodes in the mesh network;
determining, according to the reporting information, whether a target link exists in the mesh network, wherein each node on the target link is capable of providing the preset bandwidth for the terminal device;
in response to determining that the target link does not exist, determining whether a target child node exists in the mesh network, wherein each node on a link from the terminal device to a network egress through the target child node is capable of providing the preset bandwidth for the terminal device; and
in response to determining that the target child node exists, scheduling the terminal device from a child node to which the terminal device is currently connected to the target child node.

2. The scheduling method of claim 1, wherein a plurality of terminal devices access the mesh network, the resource parameter further comprises a priority, and determining, according to the reporting information, whether a target link exists in the mesh network comprises:
sequentially determining, according to the reporting information and in a descending order of priorities of the plurality of terminal devices accessing the mesh network, whether a target link from each of the plurality of terminal devices to the network egress exists in the mesh network.

3. The scheduling method of claim 1, wherein the reporting information comprises connection topology information of the child node, a remaining resource of the child node, a first rate of data transmission between the child node and a node neighboring to the child node, a second rate of data transmission between a child node to which the terminal device is connected and the terminal device; and
determining, according to the reporting information, whether a target link exists in the mesh network comprises:
determining a candidate link from the terminal device to the network egress in the mesh network according to the connection topology information of the child node to which the terminal device is connected;
determining whether each node on the candidate link is capable of providing the preset bandwidth for the terminal device according to the remaining resource of each of the node on the candidate link, the first rate, the second rate, and the preset bandwidth; and
determining the candidate link as the target link in response to determining that each of the node on the candidate link is capable of providing the preset bandwidth for the terminal device.

4. The scheduling method of claim 3, wherein determining whether each node on the candidate link is capable of providing the preset bandwidth for the terminal device according to the remaining resource of each of the node on the candidate link, the first rate, the second rate, and the preset bandwidth comprises:
determining whether the child node to which the terminal device is connected on the candidate link is capable of providing the preset bandwidth for the terminal device according to the second rate and the remaining resource of the child node to which the terminal device is connected;
determining, according to the first rate of data transmission between an intermediate node on the candidate link and a node neighboring to the intermediate node and the remaining resource of the intermediate node, whether the intermediate node is capable of providing the preset bandwidth for the terminal device, wherein the intermediate node is a node other than the master node and the child node to which the terminal device is connected among the nodes on the candidate link; and
determining whether the master node is capable of providing the preset bandwidth for the terminal device according to the first rate of data transmission between the master node and the child node connected to the master node on the candidate link and a remaining resource of the master node.

5. The scheduling method of claim 4, wherein determining whether the child node connected to the terminal device on the candidate link is capable of providing the preset bandwidth for the terminal device according to the second rate and the remaining resource of the child node connected to the terminal device comprises:
in response to R(C, S2) > BW and BW/R(C, S2) > L(S2), determining that the child node to which the terminal device is connected on the candidate link is capable of providing the preset bandwidth for the terminal device, wherein R(C, S2) represents the second rate, BW represents the preset bandwidth, and L(S2) represents the remaining resource of the child node to which the terminal device is connected;
determining, according to the first rate of data transmission between an intermediate node on the candidate link and a node neighboring to the intermediate node and the remaining resource of the intermediate node, whether the intermediate node is capable of providing the preset bandwidth for the terminal device comprises:
in response to R(S2, S1) > BW and BW/R(S2, S1) > L(S1), determining that the intermediate node is capable of providing the preset bandwidth for the terminal device, wherein R(S2, S1) represents the first rate of data transmission between the intermediate node and the node neighboring to the intermediate node, BW represents the preset bandwidth, and L(S1) represents the remaining resource of the intermediate node; and
determining whether the master node is capable of providing the preset bandwidth for the terminal device according to the first rate of data transmission between the master node and the child node connected to the master node on the candidate link and a remaining resource of the master node comprises:
in response to R(S1, M) > BW and BW/R(S1, M) > L(M), determining that the master node is capable of providing the preset bandwidth for the terminal device, wherein R(S1, M) represents the first rate of data transmission between the master node and the child node connected to the master node on the candidate link, BW represents the preset bandwidth, and L(M) represents the remaining resource of the master node.

6. The scheduling method of any one of claims 1 to 5, wherein a plurality of terminal devices access the mesh network, the resource parameter further comprises a priority, and determining whether a target child node exists in the mesh network comprises:
determining a remaining resource of each node in the mesh network;
determining a to-be-scheduled terminal device for which the target link does not exist; and
in response to an existence of a plurality of to-be-scheduled terminal devices, sequentially determining, according to the remaining resource of each node and in a descending order of priorities of the plurality of to-be-scheduled terminal devices, whether target child nodes for the plurality of to-be-scheduled terminal devices exist in the mesh network.

7. The scheduling method of any one of claims 1 to 5, wherein after determining whether a target child node exists in the mesh network, the method further comprises:
in response to determining that the target child node does not exist, allocating a reserved resource to the terminal device to meet an access requirement of the terminal device.

8. The scheduling method of any one of claims 1 to 5, wherein the preset bandwidth is a minimum bandwidth required by the terminal device for executing the target service.

9. A master node comprising: at least one processor; and
a memory communicatively connected to the at least one processor,
wherein, the memory stores an instruction executable by the at least one processor which, when executed by the at least one processor, causes the at least one processor to perform the scheduling method of any one of claims 1 to 8.

10. A computer-readable storage medium storing a computer program which, when executed by a processor, causes the processor to perform the scheduling method of any one of claims 1 to 8.
